# EUROPEAN PATENT APPLICATION

(11) **EP 3 960 362 A1**
(43) Date of publication of application: **02.03.2022**
(21) Application number: 20804775.3
(22) Date of filing: 14.05.2020
(51) Int. Cl.: B23K 26/14, B23K 26/064

(54) **LASER IRRADIATION HEAD**

(30) Priority: 14.05.2019 JP 2019091263
(71) Applicant: DMG Mori Co., Ltd., Yamatokoriyama-shi, Nara 639-1160 (JP)
(72) Inventor: MEZAWA, Yuhei, Yamatokoriyama-shi, Nara 639-1160 (JP)
(74) Representative: Isarpatent
(86) International application number: PCT/JP2020/019230
(87) International publication number: WO 2020/230844

(57) **Abstract**

A laser irradiation head includes a lower housing (21) provided with a through-hole (33), a holder (51), and a first protective glass (29) held by holder (51). Lower housing (21) is provided with a holder insertion hole (31). Lower housing (21) has an upper surface (41) in which through-hole (33) is opened. The holder (51) has a holder upper surface (46). The laser irradiation head includes a seal member (61) accommodated in a groove (47) and a plunger (71) that elastically biases holder (51). Assuming a groove cross section of groove (47) located at a most distal end in an insertion direction of holder (51), plunger (71) biases holder (51) after the groove cross section passes an opening surface of through-hole (33) in upper surface (41) when holder (51) is attached.

## Description

### TECHNICAL FIELD

The present invention relates to a laser irradiation head.

### BACKGROUND ART

In relation to a conventional laser irradiation head, for example, WO 2015/136907 (PTL 1) discloses a laser processing head used for laser processing. A laser processing head includes a first protective glass and a second protective glass that are sequentially arranged on an optical axis of a laser beam and transmit the laser beam, a nozzle provided with the first protective glass, and a shield holder provided with the second protective glass and being attachable to and detachable from the nozzle by sliding in a direction orthogonal to the optical axis of the laser beam.

### CITATION LIST

### PATENT LITERATURE

PTL 1: WO 2015/136907

### SUMMARY OF INVENTION

### TECHNICAL PROBLEM

In the laser processing head disclosed in PTL 1, particulates such as spatters or fume generated during laser processing enter a space between the first protective glass and the second protective glass, which may contaminate the protective glasses.

Further, also in the laser processing head in which a focus lens and the protective glasses are sequentially arranged on an optical path of the laser beam, there is a possibility that the focus lens and the protective glasses may be contaminated as described above.

As a measure for preventing entry of particulates as described above, it is conceivable to provide, in the shield holder, a seal member that seals a gap between the shield holder and the nozzle. However, if an excessive force is applied to the seal member when the shield holder is attached to the nozzle, the seal member may be damaged. In this case, it is not possible to effectively prevent particulates from entering the space between the first protective glass and the second protective glass (alternatively, the space between the focus lens and the protective glasses).

Therefore, an object of the present invention is to solve the above problem, and to provide a laser irradiation head that more reliably prevents contamination of a light transmissive member that transmits a laser beam.

### SOLUTION TO PROBLEM

A laser irradiation head of the present invention includes a housing provided with a through-hole forming an optical path through which a laser beam travels, a holder provided to be attachable to and detachable from the housing, and a first light transmissive member held by the holder and transmitting the laser beam. The housing is further provided with a holder insertion hole that intersects with the through-hole in a plane orthogonal to a traveling direction of the laser beam and into which the holder is inserted when the holder is attached to the housing. The housing is located upstream of the first light transmissive member in the traveling direction of the laser beam, constituting the inner wall of the holder insertion hole, and has a first plane in which the through-hole is opened. The holder has a second plane facing the first plane. The holder is provided with a groove recessed from the second plane and circulates around the opening surface of the through-hole in the first plane. The laser irradiation head includes a seal member accommodated in the groove and abutting on the first plane, and a biasing member that elastically biases the holder in a direction in which the second plane approaches the first plane.

A groove cross section is assumed in which the groove located at a most distal end in an insertion direction of the holder when the holder is attached to the housing is cut by a plane including the insertion direction of the holder and the traveling direction of the laser beam. In this case, the biasing member is disposed to bias the holder after the groove cross section passes the opening surface of the through-hole in the first plane in the insertion direction of the holder when the holder is attached to the housing.

In the laser irradiation head configured as described above, since the biasing member is disposed to bias the holder after the groove cross section passes the opening surface of the through-hole in the first plane, no external force caused by a biasing force from the biasing member is applied to the seal member disposed in the groove cross section before the groove cross section passes the opening surface of the through-hole in the first plane. This makes it possible to reduce a load applied to the seal member from the housing when the holder is attached to the housing. As a result, sealing performance between the holder and the housing by the seal member is sufficiently exerted, and it is therefore possible to more reliably prevent contamination of an upstream side of the first light transmissive member and contamination of members upstream of the first light transmissive member.

A gap is preferably provided between the seal member and the first plane before the groove cross section passes the opening surface of the through-hole in the first plane in the insertion direction of the holder when the holder is attached to the housing.

The laser irradiation head configured as described above can more effectively reduce the load applied to the seal member from the housing when the holder is attached to the housing.

The laser irradiation head preferably includes a plurality of the biasing members. The plurality of biasing members includes a first biasing member that biases the holder at a position closer to a distal end in the insertion direction of the holder than the seal member, and a second biasing member that biases the holder at a position closer to a proximal end in the insertion direction of the holder than the seal member.

In the laser irradiation head configured as described above, the seal member can be more uniformly in close contact with the first plane between the distal end and the proximal end in the insertion direction of the holder. Accordingly, the sealing performance between the holder and the housing by the sealing member can be further enhanced.

The first biasing member and the second biasing member are preferably disposed so as to start biasing the holder at an identical timing when the holder is attached to the housing.

The laser irradiation head configured as described above can prevent the seal member from being in partial contact with the first plane when the holder is attached to the housing. Accordingly, the seal member is attached in a more stable posture, and thus the sealing performance between the holder and the housing by the seal member can be further enhanced.

The laser irradiation head preferably further includes a second light transmissive member provided in the housing. The first light transmissive member transmits a laser beam from the second light transmissive member. The first plane is located between the first light transmissive member and the second light transmissive member in a traveling direction of the laser beam.

In the laser irradiation head configured as described above, it is possible to more reliably prevent contamination of the upstream side of the first light transmissive member and contamination of the second light transmissive member by sufficiently securing sealability of the space between the first light transmissive member and the second light transmissive member by the seal member.

### ADVANTAGEOUS EFFECTS OF INVENTION

As described above, in accordance with the present invention, it is possible to provide a laser irradiation head that more reliably prevents contamination of a light transmissive member that transmits a laser beam.

### BRIEF DESCRIPTION OF DRAWINGS

Fig. 1 is a schematic diagram illustrating a configuration of a processing machine including a laser irradiation head according to an embodiment of the present invention.
Fig. 2 is a partial perspective view of a laser irradiation head in Fig. 1.
Fig. 3 is a perspective view illustrating a step of attaching a holder to a housing in the laser irradiation head in Fig. 2.
Fig. 4 is a sectional view of a lower housing and the holder attached to the lower housing in the laser irradiation head in Fig. 1.
Fig. 5 is a sectional view of the lower housing as viewed in a direction of an arrow on a line V-V in Fig. 4.
Fig. 6 is a top view of the holder and a first protective glass.
Fig. 7 is a bottom view of the holder and the first protective glass.
Fig. 8 is an enlarged sectional view illustrating a range surrounded by a two-dot chain line VIII in Fig. 4.
Fig. 9 is a side view of a plunger.
Fig. 10 is a sectional view of the plunger.
Fig. 11 is a sectional view illustrating a first step of attaching the holder to the lower housing.
Fig. 12 is an enlarged sectional view illustrating a range surrounded by a two-dot chain line XII in Fig. 11.
Fig. 13 is a sectional view illustrating a second step of attaching the holder to the lower housing.
Fig. 14 is an enlarged sectional view illustrating a range surrounded by a two-dot chain line XIV in Fig. 13.

### DESCRIPTION OF EMBODIMENTS

An embodiment of the present invention will be described with reference to the drawings. In the drawings referred to below, the same or corresponding members are denoted by the same reference signs.

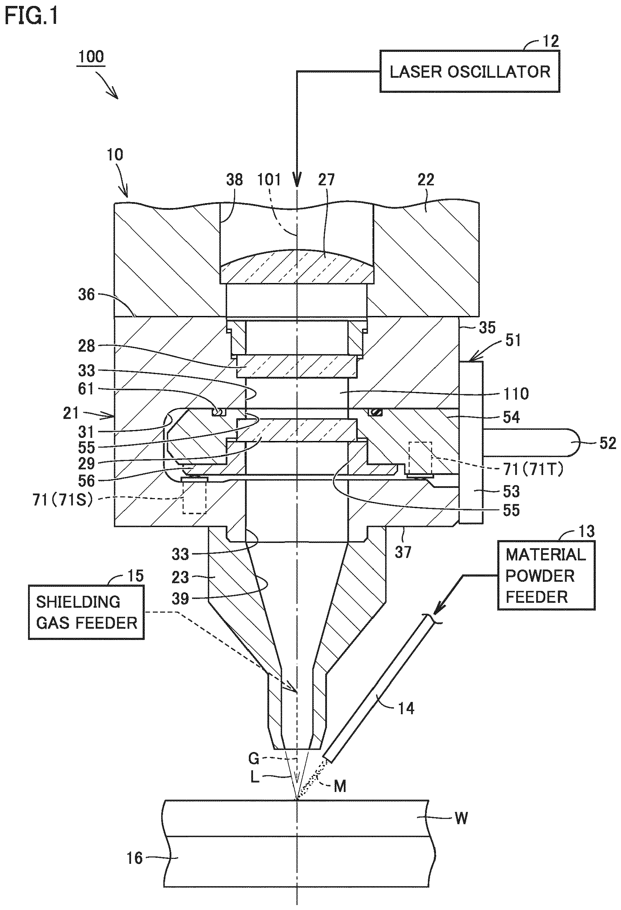

Fig. 1 is a schematic diagram illustrating a configuration of a processing machine including a laser irradiation head according to the embodiment of the present invention. Referring to Fig. 1, a processing machine 100 is a processing machine capable of additive manufacturing (AM) processing for a workpiece. The AM processing is a processing method of creating a three-dimensional shape on a workpiece by attaching a material, and a mass of the workpiece increases after the AM processing as compared with before the AM processing.

Processing machine 100 may be a processing machine capable of only the AM processing for a workpiece, or may be an AM/SM hybrid processing machine capable of the AM processing for a workpiece and subtractive manufacturing (SM) processing for a workpiece.

Processing machine 100 includes a laser irradiation head 10, a laser oscillator 12, a material powder feeder 13, a shielding gas feeder 15, and a workpiece moving stage 16.

Laser irradiation head 10 is provided in a processing area in which the AM processing is performed. Laser irradiation head 10 emits a laser beam. Laser irradiation head 10 discharges material powder M to the workpiece W and irradiates a workpiece W with a laser beam L to perform the AM processing (directed energy deposition (DED)).

Laser oscillator 12 oscillates a laser beam used for the AM processing. The laser beam oscillated in laser oscillator 12 is guided to laser irradiation head 10 through a fiber cable or the like.

Material powder feeder 13 feeds the material powder used for the AM processing together with a carrier gas toward laser irradiation head 10. The material powder is, for example, a metal powder such as a stainless alloy and a nickel alloy, or a ceramic powder. As the carrier gas, an inert gas such as argon gas is used. Laser irradiation head 10 includes a powder discharge nozzle 14. Material powder M fed from material powder feeder 13 is discharged toward an irradiation region of workpiece W with laser beam L through powder discharge nozzle 14.

Shielding gas feeder 15 feeds a shielding gas toward laser irradiation head 10. The shielding gas prevents oxidation of a metal heated and melted by the laser beam and prevents scattering of the metal. As the shielding gas, an inert gas such as argon or helium is used. A shielding gas G fed from shielding gas feeder 15 is fed to the irradiation region of workpiece W with laser beam L through a nozzle body 23 described later.

Workpiece moving stage 16 is provided in the processing area in which the AM processing is performed. Workpiece moving stage 16 faces laser irradiation head 10 in a vertical direction. Workpiece moving stage 16 is provided below laser irradiation head 10. Workpiece moving stage 16 is able to hold workpiece W.

Workpiece moving stage 16 moves workpiece W in a horizontal plane by various feeding mechanisms, guide mechanisms, a servomotor, and the like. By moving workpiece moving stage 16, a processing point of the AM processing on workpiece W can be moved.

In a configuration in which laser irradiation head 10 that emits material powder M and irradiates workpiece W with laser beam L and workpiece moving stage 16 holding workpiece W are moved relative to each other, the processing point of the AM processing on workpiece W can be moved. For example, laser irradiation head 10 may move in air within the processing area, or this configuration may be combined with workpiece moving stage 16. Fig. 1 illustrates laser irradiation head 10 that emits the laser beam downward, but an orientation of the laser irradiation head of the present invention is not limited.

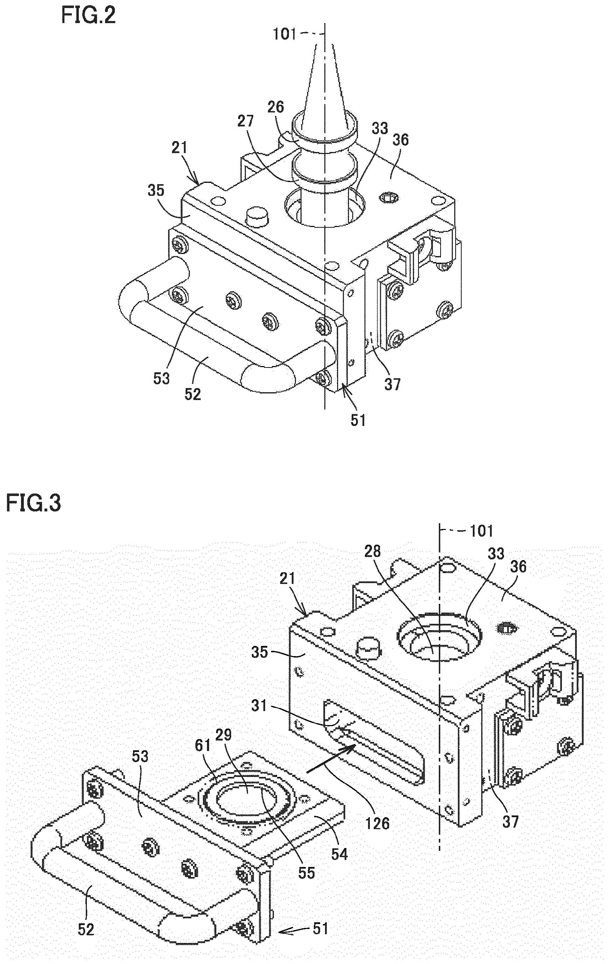

Next, a structure of laser irradiation head 10 will be described. Fig. 2 is a partial perspective view of the laser irradiation head in Fig. 1. Fig. 3 is a perspective view illustrating a step of attaching a holder to a housing in the laser irradiation head in Fig. 2.

Referring to Figs. 1 to 3, laser irradiation head 10 includes an upper housing 22, a lower housing (housing) 21, a nozzle body 23, and a holder 51.

Lower housing 21 is formed of a metal block body. Lower housing 21 as a whole has a rectangular parallelepiped shape. Lower housing 21 has an upward surface 36, a downward surface 37, and a sideward surface 35. Upward surface 36 faces upward. Downward surface 37 is disposed on a reverse side of upward surface 36. Downward surface 37 faces downward. Sideward surface 35 faces sideways. An upper end of sideward surface 35 is continuous with upward surface 36, and a lower end of sideward surface 35 is continuous with downward surface 37.

Lower housing 21 is provided with a through-hole 33. Through-hole 33 penetrates lower housing 21 in the vertical direction. Through-hole 33 is opened in upward surface 36 and downward surface 37. Through-hole 33 extends in the vertical direction around a central axis 101. Through-hole 33 has a circular opening shape centered on central axis 101.

The through-hole 33 forms an optical path through which laser beam travels in lower housing 21. A traveling direction of the laser beam in through-hole 33 is an axial direction of central axis 101. An optical axis of the laser beam traveling through through-hole 33 overlaps with central axis 101.

Lower housing 21 is further provided with a holder insertion hole 31. Holder insertion hole 31 intersects with through-hole 33 in a plane orthogonal to the traveling direction of the laser beam. Holder insertion hole 31 is opened in sideward surface 35. Holder insertion hole 31 extends in a horizontal direction from sideward surface 35. Holder insertion hole 31 is a bottomed hole provided at a predetermined depth from an opening in sideward surface 35.

Upper housing 22 is connected to lower housing 21. Upper housing 22 is connected to upward surface 36. Upper housing 22 is provided with a hole 38 for forming an optical path through which the laser beam travels. Hole 38 extends in the vertical direction around central axis 101. Hole 38 communicates with through-hole 33 at a lower end of hole 38.

Nozzle body 23 is connected to lower housing 21. Nozzle body 23 is connected to downward surface 37. Nozzle body 23 is provided with a hole 39 for forming an optical path through which the laser beam travels. Hole 39 penetrates nozzle body 23 in the vertical direction. Hole 39 extends in the vertical direction around central axis 101. Hole 39 communicates with through-hole 33 at an upper end of hole 39.

As illustrated in Figs. 2 and 3, holder 51 is provided to be attachable to and detachable from lower housing 21. Holder 51 is accommodated in holder insertion hole 31. Holder 51 is inserted into holder insertion hole 31 when attached to lower housing 21. Holder 51 is inserted in a direction indicated by an arrow 126 in Fig. 3 (hereinafter, also referred to as "insertion direction of holder 51") through an opening of holder insertion hole 31 in sideward surface 35. The insertion direction of holder 51 is a direction orthogonal to the traveling direction of the laser beam in lower housing 21 (the axial direction of central axis 101).

Holder 51 is provided with a hole 55. Hole 55 penetrates holder 51 in the vertical direction. Hole 55 extends in the vertical direction around central axis 101. Hole 55 has a circular opening shape centered on central axis 101. Hole 55 communicates with through-hole 33 at an upper end and a lower end of hole 55.

Hole 55 forms an optical path through which the laser beam travels in holder 51. A traveling direction of the laser beam in hole 55 is the axial direction of central axis 101. An optical axis of the laser beam traveling through hole 55 overlaps with central axis 101.

Laser irradiation head 10 further includes a collimation lens 26, a focus lens 27, a first protective glass (first light transmissive member) 29, and a second protective glass (second light transmissive member) 28.

Collimation lens 26 (see Fig. 2) is provided in upper housing 22. Focus lens 27 is provided in upper housing 22. Collimation lens 26 and focus lens 27 are provided on the optical path of the laser beam in upper housing 22. Focus lens 27 is provided downstream of collimation lens 26 in the traveling direction of the laser beam.

Collimation lens 26 collimates the laser beam introduced into laser irradiation head 10. Focus lens 27 condenses the laser beam from collimation lens 26 on a surface of workpiece W.

Note that a configuration of condensing the laser beam to a target spot diameter using collimation lens 26 and focus lens 27 is an example. For example, the laser beam may be condensed using one biconvex lens, or the laser beam may be condensed using another method. Further, the laser beam emitted from a fiber cable may be directly applied to the workpiece.

Second protective glass 28 is provided in lower housing 21. Second protective glass 28 is provided to face focus lens 27 in the axial direction of central axis 101. First protective glass 29 is held by holder 51. First protective glass 29 is provided to be attachable to and detachable from holder 51. First protective glass 29 is provided to face second protective glass 28 in the axial direction of central axis 101.

First protective glass 29 and second protective glass 28 are provided on optical paths of the laser beam in holder 51 and lower housing 21, respectively. First protective glass 29 is provided downstream of second protective glass 28 in the traveling direction of the laser beam. First protective glass 29 is exposed to an external space through-hole 55 in holder 51, through-hole 33 in lower housing 21, and hole 39 in nozzle body 23.

First protective glass 29 and second protective glass 28 include a transparent member capable of transmitting the laser beam. First protective glass 29 and second protective glass 28 are provided to prevent particulates such as spatters or fume generated by the AM processing for workpiece W from adhering to optical components such as focus lens 27.

During the AM processing for workpiece W, particulates such as spatters or fume adhere to first protective glass 29. Meanwhile, first protective glass 29 is held by holder 51 attachable to and detachable from lower housing 21. By removing holder 51 from lower housing 21, first protective glass 29 can be replaced or cleaned. At this time, since second protective glass 28 is still provided in lower housing 21, it is possible to prevent focus lens 27 from being exposed to the external space and being contaminated (double structure of protective glasses) when first protective glass 29 is replaced or cleaned.

Although laser irradiation head 10 to which the double structure of the protective glasses is applied has been described in the embodiment, the present invention is not limited to this configuration, and can also be applied to a laser irradiation head that protects an optical component such as a focus lens with a single protective glass.

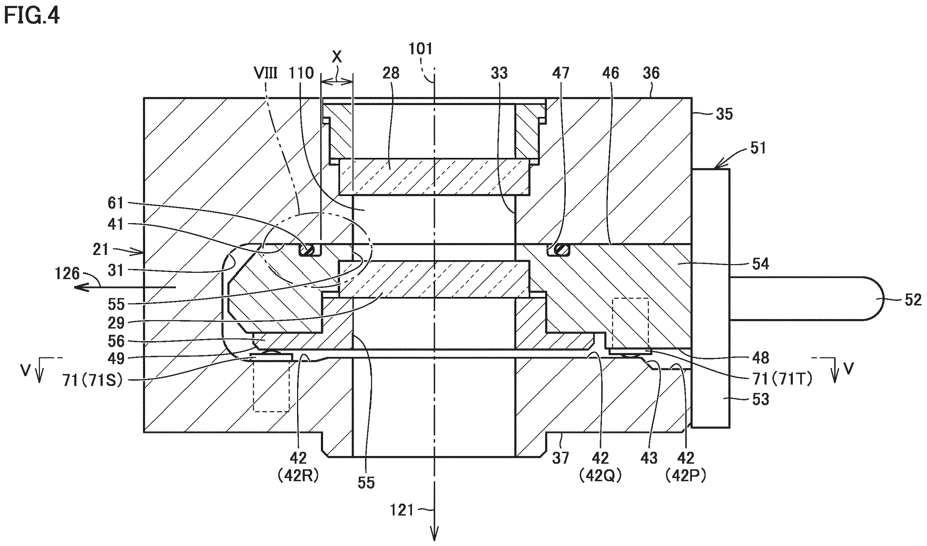

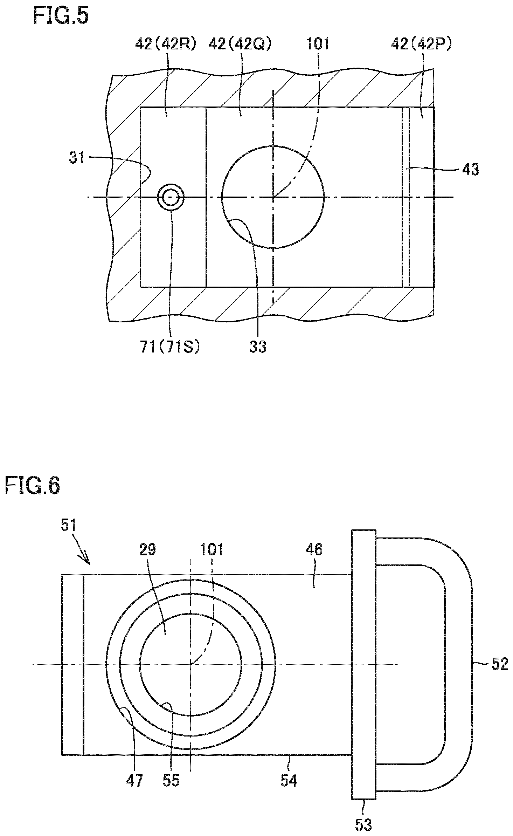

Fig. 4 is a sectional view of the lower housing and the holder attached to the lower housing in the laser irradiation head in Fig. 1. Fig. 5 is a sectional view of the lower housing as viewed in a direction of an arrow on a line V-V in Fig. 4.

Referring to Figs. 4 and 5, lower housing 21 has an upper surface (first plane) 41 and a lower surface 42.

Upper surface 41 constitutes an inner wall of holder insertion hole 31. Upper surface 41 constitutes an upper wall of holder insertion hole 31. Upper surface 41 is formed of a plane. Upper surface 41 is formed of a plane orthogonal to the traveling direction of the laser beam (the axial direction of central axis 101). Upper surface 41 is located upstream of the first protective glass 29 in the traveling direction of the laser beam. Upper surface 41 is located between first protective glass 29 and second protective glass 28 in the traveling direction of the laser beam. Through-hole 33 is opened in upper surface 41. Through-hole 33 upstream of holder insertion hole 31 in the traveling direction of the laser beam is opened in upper surface 41.

Lower surface 42 constitutes the inner wall of holder insertion hole 31. Lower surface 42 constitutes a bottom wall of holder insertion hole 31. Lower surface 42 is provided to face upper surface 41 in the axial direction of central axis 101. Lower surface 42 as a whole is formed of a plane orthogonal to the traveling direction of the laser beam. Through-hole 33 downstream of holder insertion hole 31 in the traveling direction of the laser beam is opened in lower surface 42.

Lower surface 42 has a proximal end region 42P, an intermediate region 42Q, and a distal end region 42R. Proximal end region 42P, intermediate region 42Q, and distal end region 42R are arranged in that order from a proximal end to a distal end in the insertion direction of holder 51 (the direction indicated by arrow 126 in Fig. 3). Through-hole 33 is opened to intermediate region 42Q.

A level difference in the axial direction of central axis 101 is provided between proximal end region 42P and intermediate region 42Q. A distance between upper surface 41 and intermediate region 42Q in the axial direction of central axis 101 is smaller than a distance between upper surface 41 and proximal end region 42P in the axial direction of central axis 101. That is, proximal end region 42P is stepped down from intermediate region 42Q.

A first slope 43 is provided at a boundary between proximal end region 42P and intermediate region 42Q. First slope 43 extends obliquely upward from proximal end region 42P toward intermediate region 42Q.

A level difference in the axial direction of central axis 101 is provided between intermediate region 42Q and distal end region 42R. The distance between upper surface 41 and intermediate region 42Q in the axial direction of central axis 101 is smaller than a distance between upper surface 41 and distal end region 42R in the axial direction of central axis 101. That is, distal end region 42R is one level lower than intermediate region 42Q. The distance between upper surface 41 and distal end region 42R in the axial direction of central axis 101 is smaller than the distance between upper surface 41 and proximal end region 42P in the axial direction of central axis 101.

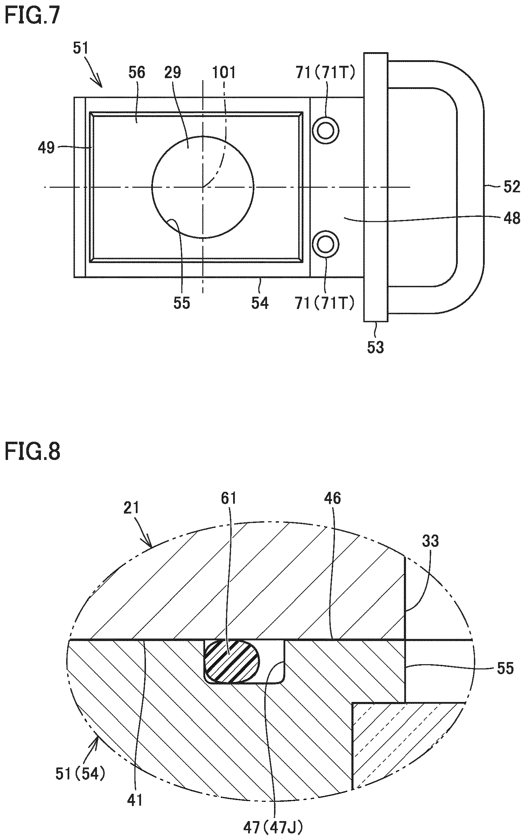

Fig. 6 is a top view of the holder and the first protective glass. Fig. 7 is a bottom view of the holder and the first protective glass.

Referring to Figs. 4 to 7, holder 51 includes a base 54, a glass holder 56, an outer plate 53, and a handle 52.

Base 54 is accommodated inside of holder insertion hole 31. Base 54 is formed of a plate material whose thickness direction is the axial direction of central axis 101.

Holder 51 (base 54) has a holder upper surface (second plane) 46 and a holder lower surface 48. Holder upper surface 46 is formed of a plane. Holder upper surface 46 is formed of a plane orthogonal to the traveling direction of the laser beam (the axial direction of central axis 101). Holder upper surface 46 faces upper surface 41 of lower housing 21. Holder upper surface 46 faces upper surface 41 in the axial direction of central axis 101. Holder upper surface 46 is in surface contact with upper surface 41.

Holder lower surface 48 faces lower surface 42 of lower housing 21. A gap is provided between holder lower surface 48 and lower surface 42.

Glass holder 56 is attached to base 54 from a side of holder lower surface 48. Hole 55 penetrates base 54 and glass holder 56 in the axial direction of central axis 101. First protective glass 29 is held by base 54 by being pressed by glass holder 56 from the axial direction of central axis 101.

Holder 51 (glass holder 56) has a second slope 49. Second slope 49 is provided at a position facing lower surface 42 (distal end region 42R) in the axial direction of central axis 101. Second slope 49 extends obliquely upward from the proximal end to the distal end in the insertion direction of holder 51.

Outer plate 53 and the handle 52 are provided outside of holder insertion hole 31. Outer plate 53 has a plate shape whose thickness direction is the insertion direction of holder 51. Outer plate 53 is in contact with sideward surface 35 of lower housing 21 in the insertion direction of holder 51. Base 54 and handle 52 are attached to outer plate 53. Handle 52 has a grip form, and is gripped by a user when holder 51 is attached to or detached from lower housing 21.

Fig. 8 is an enlarged sectional view illustrating a range surrounded by a two-dot chain line VIII in Fig. 4. Referring to Figs. 4 to 8, holder 51 is provided with a groove 47. Groove 47 has a recessed shape recessed from holder upper surface 46. Groove 47 circulates around an opening surface of through-hole 33 in upper surface 41 of lower housing 21.

Groove 47 is provided in base 54. Groove 47 extends on a circumference centered on central axis 101.

Note that a circumferential shape of groove 47 is not limited to a circular shape, and may be, for example, an elliptical shape or a rectangular shape in which adjacent sides are connected while being curved.

Laser irradiation head 10 further includes a seal member 61. Seal member 61 is an annular seal member. Seal member 61 is formed of an elastic member such as rubber. Seal member 61 is accommodated in groove 47. Seal member 61 is in contact with upper surface 41 of lower housing 21.

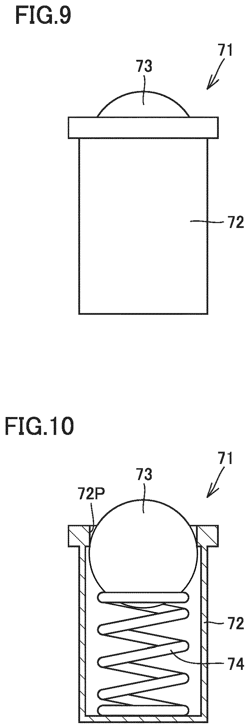

Fig. 9 is a side view of a plunger. Fig. 10 is a sectional view of the plunger.

Referring to Figs. 4 to 10, laser irradiation head 10 further includes a plunger (biasing member) 71. Plunger 71 elastically biases holder 51 in a direction in which holder upper surface 46 approaches upper surface 41 of lower housing 21. Plunger 71 elastically biases holder 51 upward.

Plunger 71 is provided inside of holder insertion hole 31. Plunger 71 is provided between holder 51 and lower surface 42 of lower housing 21 in the axial direction of central axis 101. Plunger 71 elastically deforms in the axial direction of central axis 101 to generate elastic force for biasing holder 51 upward.

Plunger 71 includes a case body 72, a ball 73, and a coil spring 74. Case body 72 has a bottomed cylindrical shape. Case body 72 is provided such that an axial direction of the cylindrical shape is parallel to central axis 101. Case body 72 is provided with an opening 72P. Opening 72P opens in one direction along the axial direction of central axis 101.

Ball 73 is accommodated in case body 72, and a part of ball 73 is provided so as to protrude outward through opening 72P. Coil spring 74 is accommodated inside of case body 72 side by side with ball 73. Coil spring 74 applies elastic force in the axial direction of central axis 101 (elastic force in a direction in which ball 73 protrudes out of case body 72) to the ball 73.

Laser irradiation head 10 includes a plurality of plungers 71 (a first plunger 71S and a second plunger 71T).

First plunger (first biasing member) 71S biases holder 51 at a position closer to the distal end in the insertion direction of holder 51 than seal member 61. Second plunger (second biasing member) 71T biases holder 51 at a position closer to the proximal end in the insertion direction of holder 51 than seal member 61.

First plunger 71S is provided closer to the distal end in the insertion direction of holder 51 than central axis 101. First plunger 71S is provided closer to the distal end in the insertion direction of holder 51 than through-hole 33. First plunger 71S is provided closer to the distal end in the insertion direction of holder 51 than groove 47 (seal member 61). First plunger 71S is provided on a straight line extending from central axis 101 in the insertion direction of holder 51.

First plunger 71S is provided in lower housing 21. First plunger 71S is embedded in lower surface 42 of lower housing 21 such that ball 73 is exposed in a space of holder insertion hole 31. First plunger 71S is provided in distal end region 42R of lower surface 42. Ball 73 is in contact with holder 51 (glass holder 56) in the axial direction of central axis 101. When ball 73 is pushed into case body 72 while resisting the elastic force of coil spring 74, first plunger 71S elastically biases holder 51 upward.

Second plunger 71T is provided closer to the proximal end in the insertion direction of the holder 51 than central axis 101. Second plunger 71T is provided closer to the proximal end in the insertion direction of holder 51 than through-hole 33. Second plunger 71T is provided closer to the proximal end in the insertion direction of holder 51 than groove 47 (seal member 61).

Laser irradiation head 10 includes a plurality of (two) second plungers 71T. The number of second plungers 71T is larger than the number of first plungers 71S. The plurality of second plungers 71T is provided apart from each other in a direction orthogonal to the insertion direction of holder 51. The plurality of second plungers 71T is provided so as to be symmetrical about the straight line extending from central axis 101 in the insertion direction of holder 51.

Second plunger 71T is provided in holder 51 (base 54). Second plunger 71T is embedded in holder lower surface 48 such that ball 73 is exposed in the space of holder insertion hole 31. Second plunger 71T is in contact with lower surface 42 of lower housing 21 in the axial direction of central axis 101. Second plunger 71T is in contact with intermediate region 42Q of lower surface 42. When ball 73 is pushed into case body 72 while resisting the elastic force of coil spring 74, second plunger 71T elastically biases holder 51 upward.

Referring to Figs. 4 and 8, plungers 71 (first plunger 71S and second plunger 71T) elastically bias holder 51 upward, and thus seal member 61 in groove 47 is compressed and deformed by being sandwiched between a groove bottom of groove 47 and upper surface 41 of lower housing 21. As a result, holder 51 (holder upper surface 46) and lower housing 21 (upper surface 41) are sealed, and this can prevent particulates such as spatters or fume from entering a space 110 between first protective glass 29 and second protective glass 28.

In the embodiment, first plunger 71S biases holder 51 at a position closer to the distal end in the insertion direction of holder 51 than seal member 61, and second plunger 71T biases holder 51 at a position closer to the proximal end in the insertion direction of holder 51 than seal member 61. This configuration allows seal member 61 to be more uniformly in close contact with upper surface 41 of lower housing 21 between the distal end and the proximal end in the insertion direction of holder 51. It is therefore possible to more reliably prevent particulates from entering space 110 between first protective glass 29 and second protective glass 28.

The biasing member of the present invention is not limited to plunger 71, and may be any member that elastically biases the holder in a predetermined direction.

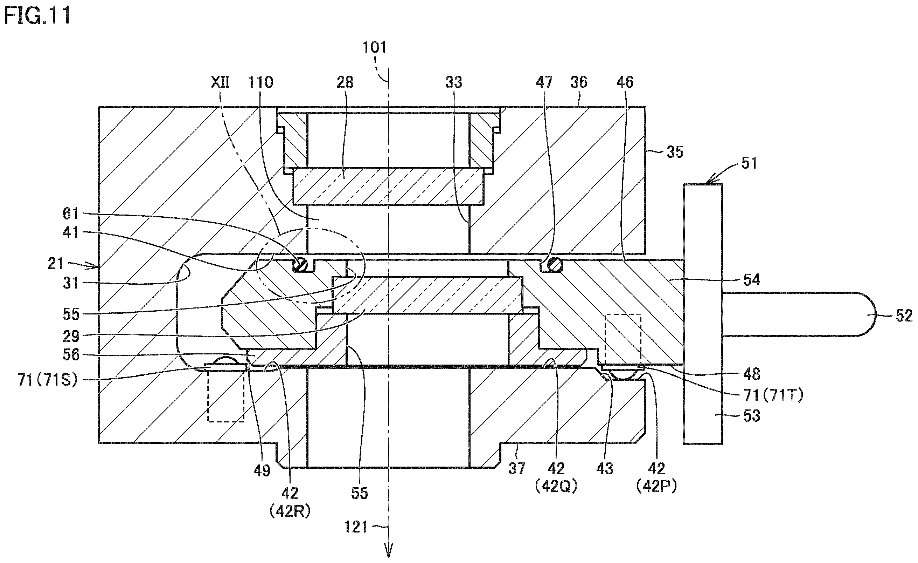

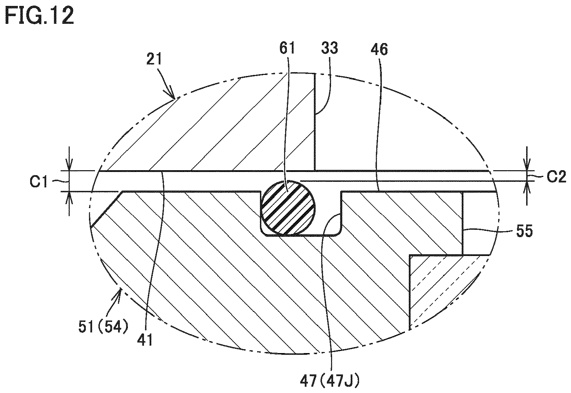

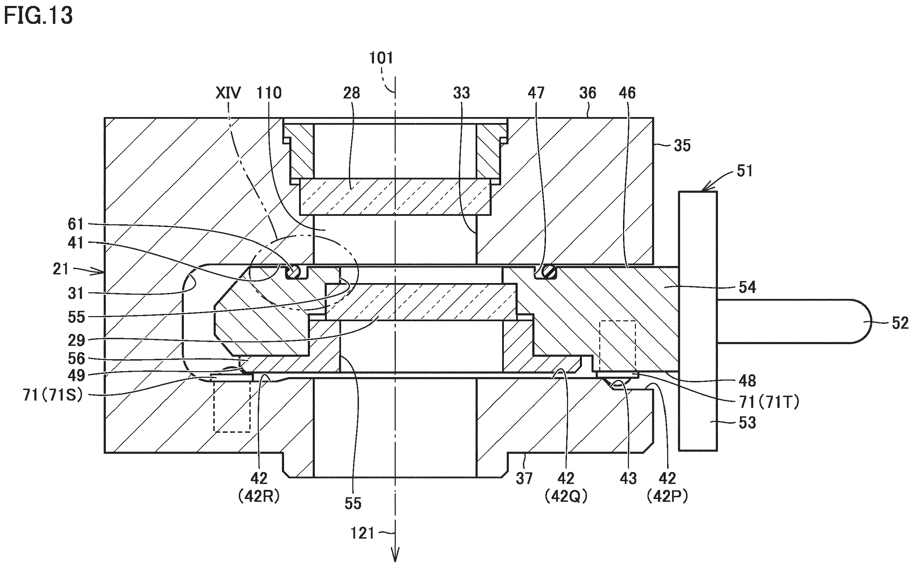

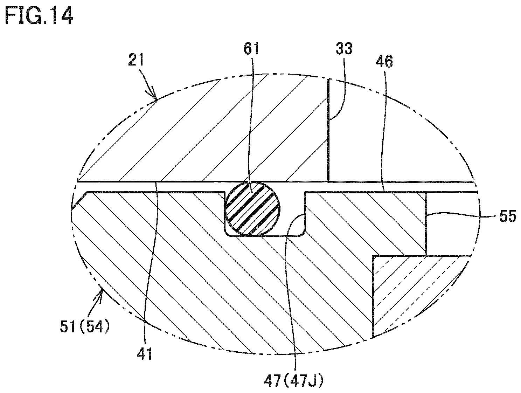

Fig. 11 is a sectional view illustrating a first step of attaching the holder to the lower housing. Fig. 12 is an enlarged sectional view illustrating a range surrounded by a two-dot chain line VII in Fig. 11. Fig. 13 is a sectional view illustrating a second step of attaching the holder to the lower housing. Fig. 14 is an enlarged sectional view illustrating a range surrounded by a two-dot chain line XIV in Fig. 13.

Figs. 8, 12, and 14 illustrate a groove cross section 47J obtained by cutting groove 47 along a plane including the insertion direction of holder 51 (a direction indicated by arrow 126 in Fig. 4) and the traveling direction of the laser beam (the axial direction of central axis 101), groove 47 being located on a most distal end in the insertion direction of holder 51 when holder 51 is attached to lower housing 21.

Referring to Figs. 4, 8, and 11 to 14, plungers 71 (first plunger 71S and second plunger 71T) are disposed to bias holder 51 after groove cross section 47J passes the opening surface of through-hole 33 in upper surface 41 in the insertion direction of holder 51 when holder 51 is attached to lower housing 21.

Hereinafter, the above arrangement of plungers 71 (first plunger 71S and second plunger 71T) will be described in more detail.

Referring to Figs. 11 and 12, when holder 51 is attached to lower housing 21, holder 51 is inserted into holder insertion hole 31 while being placed on lower surface 42 of lower housing 21.

In an initial stage of insertion of holder 51, groove cross section 47J moves closer to the proximal end in the insertion direction of holder 51 than the opening surface of through-hole 33 in upper surface 41, and then moves immediately below the opening surface of through-hole 33 in upper surface 41. In Figs. 11 and 12, groove cross section 47J and the opening surface of through-hole 33 in upper surface 41 partially overlap in the axial direction of central axis 101. This state corresponds to a state before groove cross section 47J passes the opening surface of through-hole 33 in upper surface 41 in the insertion direction of holder 51.

At this time, a gap is provided between holder upper surface 46 and upper surface 41 of lower housing 21. A gap is provided between seal member 61 and upper surface 41 of lower housing 21.

As an example, a size C1 of the gap between holder upper surface 46 and upper surface 41 of lower housing 21 illustrated in Fig. 12 is greater than or equal to 0.6 mm, and a size C2 of the gap between seal member 61 and upper surface 41 of lower housing 21 is greater than or equal to 0.3 mm.

Holder 51 does not reach first plunger 71S, and thus first plunger 71S does not elastically bias holder 51 upward. Second plunger 71T initially moves outside of holder insertion hole 31, and eventually moves on proximal end region 42P of lower surface 42 of lower housing 21. During this time, second plunger 71T does not elastically bias holder 51 upward.

Referring to Figs. 13 and 14, in an intermediate stage of the insertion of holder 51, groove cross section 47J passes the opening surface of through-hole 33 in upper surface 41 in the insertion direction of holder 51. Groove cross section 47J moves closer to the distal end in the insertion direction of holder 51 than the opening surface of through-hole 33 in upper surface 41.

After groove cross section 47J passes the opening surface of through-hole 33 in upper surface 41 in the insertion direction of holder 51, holder 51 (second slope 49 of glass holder 56) comes into contact with first plunger 71S (ball 73). Second plunger 71T (ball 73) comes into contact with first slope 43 of lower surface 42 of lower housing 21. When ball 73 is pushed into case body 73 along with the insertion of holder 51, first plunger 71S and second plunger 71T elastically bias holder 51 upward.

In the embodiment, first plunger 71S and second plunger 71T are provided so as to start biasing holder 51 at an identical timing when holder 51 is attached to lower housing 21.

Referring to Figs. 4 and 8, at a final stage of the insertion of holder 51, holder 51 (glass holder 56) rides on first plunger 71S (ball 73), and second plunger 71T rides on intermediate region 42Q of lower surface 42 of lower housing 21. When outer plate 53 of holder 51 abuts on sideward surface 35 of lower housing 21, the attachment of holder 51 to lower housing 21 is completed.

Referring to Fig. 4, a length X between groove cross section 47J and the opening surface of through-hole 33 in upper surface 41 in the insertion direction of holder 51 is larger than a moving length of holder 51 after first plunger 71S and second plunger 71T start elastically biasing holder 51 upward.

If plungers 71 (first plunger 71S and second plunger 71T) elastically biases holder 51 upward in the initial stage of the insertion of holder 51 illustrated in Figs. 11 and 12, seal member 61 may be sandwiched between an opening edge of the opening surface of through-hole 33 in upper surface 41 and a side wall of groove cross section 47J. Further, seal member 61 moves a long distance along the insertion direction of holder 51 while being pressed against upper surface 41. As a result, there is a concern that seal member 61 may be damaged, or that the attachment may be done with seal member 61 twisted or greatly worn.

Meanwhile, in the embodiment, plungers 71 (first plunger 71S and second plunger 71T) are disposed so as to bias holder 51 after passing the opening surface of through-hole 33 in upper surface 41. This configuration resolves a concern of breakage of seal member 61 as described above, and thus sealing performance by seal member 61 can be sufficiently obtained. As a result, particulates such as spatters or fume can be prevented from entering space 110 between first protective glass 29 and second protective glass 28, and contamination of first protective glass 29 and second protective glass 28 can be reliably prevented.

In the embodiment, the gap is provided between seal member 61 and upper surface 41 before groove cross section 47J passes the opening surface of through-hole 33 in upper surface 41. This configuration can effectively prevent damage to seal member 61 by further reducing a load applied to seal member 61 from lower housing 21.

In the embodiment, first plunger 71S and second plunger 71T are provided so as to start biasing holder 51 at an identical timing when holder 51 is attached to lower housing 21. This configuration can prevent seal member 61 from being in partial contact with upper surface 41 of lower housing 21. Accordingly, seal member 61 is attached in a more stable orientation, and thus sealing performance by seal member 61 can be further expected.

In the embodiment, the configuration of laser irradiation head 10 used in processing machine 100 has been described, but the laser irradiation head of the present invention is not limited to such an application. The laser irradiation head of the present invention may be used for, for example, various measurement devices using laser beam. The laser irradiation head of the present invention may be used in a laser processing machine or a powder-bed AM processing machine.

It should be understood that the embodiment disclosed herein is illustrative in all respects and not restrictive. The scope of the present invention is defined not by the above description but by the claims, and is intended to include meanings equivalent to the claims and all modifications within the claims.

### INDUSTRIAL APPLICABILITY

The present invention is applied to, for example, a processing machine or a measurement device using a laser beam.

### REFERENCE SIGNS LIST

10: Laser irradiation head, 12: Laser oscillator, 13: Material powder feeder, 14: Powder discharge nozzle, 15: Shielding gas feeder, 16: Workpiece moving stage, 21: Lower housing, 22: Upper housing, 23: Nozzle body, 26: Collimation lens, 27: Focus lens, 28: Second protective glass, 29: First protective glass, 31: Holder insertion hole, 33: Through-hole, 35: Sideward surface, 36: Upward surface, 37: Downward surface, 38, 39, 55: Hole, 41: Upper surface, 42: Lower surface, 42P: Proximal end region, 42Q: Intermediate region, 42R: Distal end region, 43: First slope, 46: Holder upper surface, 47: Groove, 47J: Groove cross section, 48: Holder lower surface, 49: Second slope, 51: Holder, 52: Handle, 53: Outer plate, 54: Base, 56: Glass holder, 61: Seal member, 71: Plunger, 71S: First plunger, 71T: Second plunger, 72: Case body, 72P: Opening, 73: Ball, 74: Coil spring, 100: Processing machine, 101: Central axis, 110: Space

## Claims

1. A laser irradiation head comprising:
a housing provided with a through-hole forming an optical path through which a laser beam travels;
a holder provided to be attachable to and detachable from the housing; and
a first light transmissive member that is held by the holder and that transmits a laser beam,
the housing being further provided with a holder insertion hole into which the holder is inserted when the holder is attached to the housing, the holder insertion hole intersecting with the through-hole in a plane orthogonal to a traveling direction of the laser beam,
the housing having a first plane located upstream of the first light transmissive member in the traveling direction of the laser beam, constituting an inner wall of the holder insertion hole, and in which the through-hole is opened, and
the holder having a second plane facing the first plane,
the holder being provided with a groove recessed from the second plane and circulating around an opening surface of the through-hole in the first plane,
the laser irradiation head further comprising:
a seal member accommodated in the groove and abutting on the first plane; and
a biasing member elastically biasing the holder in a direction in which the second plane approaches the first plane,
assuming a groove cross section obtained by cutting the groove along a plane including an insertion direction of the holder and the traveling direction of the laser beam, the groove being located at a most distal end in the insertion direction of the holder when the holder is attached to the housing,
the biasing member being disposed to bias the holder after the groove cross section passes the opening surface of the through-hole in the first plane in the insertion direction of the holder when the holder is attached to the housing.

2. The laser irradiation head according to claim 1, wherein when the holder is attached to the housing, a gap is provided between the seal member and the first plane before the groove cross section passes the opening surface of the through-hole in the first plane in the insertion direction of the holder.

3. The laser irradiation head according to claim 1 or 2, comprising a plurality of the biasing members, wherein the plurality of biasing members includes a first biasing member that biases the holder at a position closer to a distal end in the insertion direction of the holder than the seal member, and a second biasing member that biases the holder at a position closer to a proximal end in the insertion direction of the holder than the seal member.

4. The laser irradiation head according to claim 3, wherein the first biasing member and the second biasing member are arranged to start biasing the holder at an identical timing when the holder is attached to the housing.

5. The laser irradiation head according to any one of claims 1 to 4, further comprising a second light transmissive member provided in the housing, wherein
the first light transmissive member transmits a laser beam from the second light transmissive member, and
the first plane is located between the first light transmissive member and the second light transmissive member in the traveling direction of the laser beam.

## Amended claims

### Amended claims under Art. 19.1 PCT

1. (Amended) A laser irradiation head comprising:
a housing provided with a through-hole forming an optical path through which a laser beam travels;
a holder provided to be attachable to and detachable from the housing; and
a first light transmissive member that is held by the holder and that transmits a laser beam,
the housing being further provided with a holder insertion hole into which the holder is inserted when the holder is attached to the housing, the holder insertion hole intersecting with the through-hole in a plane orthogonal to a traveling direction of the laser beam,
the housing having a first plane located upstream of the first light transmissive member in the traveling direction of the laser beam, constituting an inner wall of the holder insertion hole, and in which the through-hole is opened, and
the holder having a second plane facing the first plane,
the holder being provided with a groove recessed from the second plane and circulating around an opening surface of the through-hole in the first plane,
the laser irradiation head further comprising:
a seal member accommodated in the groove and abutting on the first plane; and a biasing member elastically biasing the holder in a direction in which the second plane approaches the first plane,
assuming a groove cross section obtained by cutting the groove along a plane including an insertion direction of the holder and the traveling direction of the laser beam, the groove being located at a most distal end in the insertion direction of the holder when the holder is attached to the housing,
the biasing member being disposed to bias the holder after the groove cross section passes the opening surface of the through-hole in the first plane in the insertion direction of the holder when the holder is attached to the housing,
the housing further having a third plane facing the first plane in the traveling direction of the laser beam and constituting an inner wall of the holder insertion hole,
the biasing member protruding from one member that is one of the holder and the third plane when the holder is not attached to the housing, and protruding from the one member toward other member that is the other of the holder and the third plane and contacting with the other member at a tipprotruding toward the other member when the holder is attached to the housing, and
a protruding length of the biasing member from the one member when the holder is not attached to the housing being larger than a protruding length of the biasing member from the one member when the holder is attached to the housing.

2. The laser irradiation head according to claim 1, wherein when the holder is attached to the housing, a gap is provided between the seal member and the first plane before the groove cross section passes the opening surface of the through-hole in the first plane in the insertion direction of the holder.

3. The laser irradiation head according to claim 1 or 2, comprising a plurality of the biasing members, wherein the plurality of biasing members includes a first biasing member that biases the holder at a position closer to a distal end in the insertion direction of the holder than the seal member, and a second biasing member that biases the holder at a position closer to a proximal end in the insertion direction of the holder than the seal member.

4. The laser irradiation head according to claim 3, wherein the first biasing member and the second biasing member are arranged to start biasing the holder at an identical timing when the holder is attached to the housing.

5. The laser irradiation head according to any one of claims 1 to 4, further comprising a second light transmissive member provided in the housing, wherein
the first light transmissive member transmits a laser beam from the second light transmissive member, and
the first plane is located between the first light transmissive member and the second light transmissive member in the traveling direction of the laser beam.

6. (Added) The laser irradiation head according to any one of claims 1 to 5, wherein the biasing member has a shape in which a cross-sectional area obtained by cutting the tip in contact with the other member by a plane orthogonal to the traveling direction of the laser beam decreases from the one member toward the other member.
